# EUROPEAN PATENT APPLICATION

(11) **EP 2 717 066 A1**
(43) Date of publication of application: **09.04.2014**
(21) Application number: 13182593.7
(22) Date of filing: 02.09.2013
(51) Int. Cl.: G01S 5/12

(54) **Geolocation systems and methods**

(30) Priority: 08.10.2012 US 201213647093
(71) Applicant: The Boeing Company, Chicago, IL 60606-2016 (US)
(72) Inventor: Kuo, Lisa, El Segundo, CA California 90245-2710 (US); Veysoglu, Murat E., El Segundo, CA California 90245-2701 (US)
(74) Representative: Thorniley, Peter

(57) **Abstract**

A method for locating an interferer is provided. The method includes determining, from a time delay of arrival (TDOA) signature between signals received from the interferer at two satellites, a first curve on which the interferer lies, determining, from direction of arrival information generated using signals received from the interferer at a plurality of elements of a linear array, a second curve on which the interferer lies, and determining, based on an intersection between the first and second curves, the location of the interferer.

## Description

### BACKGROUND OF THE INVENTION

The field of the disclosure relates generally to geolocation, and more specifically, to methods and systems for locating an interferer using a satellite system.

Generally, interference geolocation techniques can be grouped into two categories. The first category includes time difference of arrival (TDOA) and/or frequency difference of arrival (FDOA) techniques that use multiple receivers (e.g., satellites). In such techniques, a TDOA signature is determined from two receivers, and an FDOA signature is determined from one of the two receivers and used to locate the interferer. The FDOA signature is created as a result of a Doppler shift between the receiver and the transmitter (i.e., the interferer). Consequently, if the interferer is stationary and the receiver is not moving, there is no FDOA signature created and such techniques do not work. In such scenarios, an additional TDOA signature can be obtained from a third receiver.

The second category of interference geolocation techniques uses array signal processing techniques, such as MUSIC or ESPRIT, to determine an interferer location. These techniques do not use any TDOA or FDOA information. Rather, in such techniques, an array correlation matrix is formed from which the direction-of-arrival information can be obtained. However, generally known array processing techniques require a relatively complex antenna array and associated signal processing components, especially when the number of elements in the array is large.

### BRIEF DESCRIPTION

In one aspect, a method for locating an interferer is provided. The method includes determining, from a time delay of arrival (TDOA) signature between signals received from the interferer at two satellites, a first curve on which the interferer lies, determining, from direction of arrival information generated using signals received from the interferer at a plurality of elements of a linear array, a second curve on which the interferer lies, and determining, based on an intersection between the first and second curves, the location of the interferer.

In another aspect, a system for locating an interferer is provided. The system includes a linear array including a plurality of elements configured to receive signals from the interferer, and a computing device communicatively coupled to the linear array, a first satellite, and a second satellite. The computing device is configured to determine, from a time delay of arrival (TDOA) signature between signals received from the interferer at the first and second satellites, a first curve on which the interferer lies, determine, from direction of arrival information generated from signals received from the interferer at the plurality of elements of the linear array, a second curve on which the interferer lies, and determine, based on an intersection between the first and second curves, the location of the interferer.

In yet another aspect, a computing device for determining the location of an interferer is provided. The computing device is configured to determine, from a time delay of arrival (TDOA) signature between signals received from the interferer at two satellites, a first curve on which the interferer lies, determine, from direction of arrival information generated using signals received from the interferer at a plurality of elements of a linear array, a second curve on which the interferer lies, and determine, based on an intersection between the first and second curves, the location of the interferer.

Advantageously, to determine a first curve, the computing device may be configured to determine a line of longitude.

Advantageously, to determine a second curve, the computing device may be configured to determine a line of latitude.

Advantageously, to determine a first curve, the computing device may be configured to determine, from a TDOA signature between signals received from the interferer at two geostationary satellites, a first curve on which the interferer lies.

Advantageously, the computing device may be further configured to perform signal processing on the signals received from the interferer at the plurality of elements to generate the direction of arrival information.

Advantageously, to determine a second curve, the computing device may be configured to determine, from direction of arrival information generated using signals received from the interferer at a plurality of elements aligned in a North-South direction, a second curve on which the interferer lies.

Advantageously, to determine a second curve, the computing device may be configured to determine, from directional of arrival information generated using signals received from the interferer at a plurality of elements of a linear array on one of the first satellite and the second satellite, a second curve.

In yet another aspect, executable instructions embodied in a computer readable medium for determining the location of an interferer are provided. Such instructions, when executed by one or more processors, cause a processor to perform at least a portion of the methods described.

The features, functions, and advantages that have been discussed can be achieved independently in various embodiments or may be combined in yet other embodiments, further details of which can be seen with reference to the following description and drawings.

### BRIEF DESCRIPTION OF THE DRAWINGS

Fig. 1 is a schematic diagram of an exemplary geolocation system.

Figs. 2A and 2B are schematic diagrams illustrating an exemplary method of locating an interferer using the system shown in Fig. 1.

Fig. 3 is a schematic diagram of an exemplary linear array system that may be used with the geolocation system shown in Fig. 1.

Fig. 4 is a block diagram of an exemplary computing device that may be used with the geolocation system shown in Fig. 1.

Fig. 5 is a flowchart of an exemplary method that may be implemented to locate an interferer.

### DETAILED DESCRIPTION

The systems and methods described herein enable an interferer to be located. A first curve is generated using a time difference of arrival signature between two satellites. A second curve is generated using direction of arrival information generated from a linear array. The location of the interferer is determined to be the intersection between the first and second curves.

Exemplary technical effects of the methods and systems described herein include at least one of (a) determining, from a time delay of arrival (TDOA) signature between signals received from the interferer by two satellites, a first curve on which the interferer lies; (b) determining, from direction of arrival information generated using signals received from the interferer at a plurality of elements of a linear array, a second curve on which the interferer lies; and (c) determining, based on at an intersection between the first and second curves, the location of the interferer.

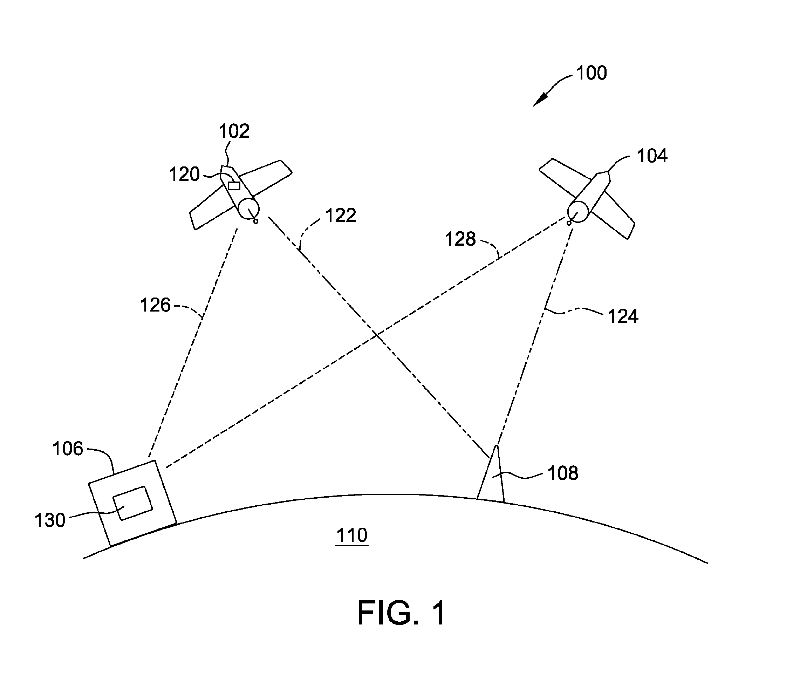

Fig. 1 is a schematic diagram of an exemplary geolocation system 100. In the exemplary embodiment, geolocation system 100 includes a first satellite 102, a second satellite 104, and a ground station 106. First and second satellites 102 and 104, respectively, are coupled in wireless communication with ground station 106 for determining a location of an interferer 108 on the Earth 110, as is described in more detail below. As used herein, an "interferer" may refer to a source of interference, and/or any other object that may be located using geolocation system 100.

In the exemplary embodiment, first and second satellites 102 and 104, respectively, are geostationary satellites. That is, satellites 102 and 104 each have a circular geosynchronous orbit that is substantially directly above the Equator of the Earth 110. Alternatively, satellites 102 and 104 may be any type of satellite that enables system 100 to function as described herein. Further, system 100 may include any number of satellites that enables system 100 to function as described herein.

First satellite 102 includes a linear antennae array 120, in the exemplary embodiment. Alternatively, first and second satellites 102 and 104 may each include linear arrays 120, or linear array 120 may be included on a third satellite (not shown) that is different than satellites 102 and 104. Linear array 120 facilitates enables a location of interferer 108 to be determined, as described in more detail below.

To locate interferer 108, first and second satellites 102 and 104, respectively, each receive a signal transmitted from interferer 108 along a respective first communication path 122 and a second communication path 124. First satellite 102 transmits the received signal to ground station 106 along a third communication path 126, and second satellite 104 transmits the received signal to ground station 106 along a fourth communication path 128. Signals from linear array 120, and signals from satellites 102 and 104 may be transmitted using either analog or digital transformations.

From the received signals, a computing device 130 at ground station 106 determines a time difference of arrival (TDOA) signature for interferer 108. The TDOA signature represents the amount of time elapsed between first satellite 102 receiving the signal from interferer 108 and second satellite 104 receiving the signal from interferer 108.

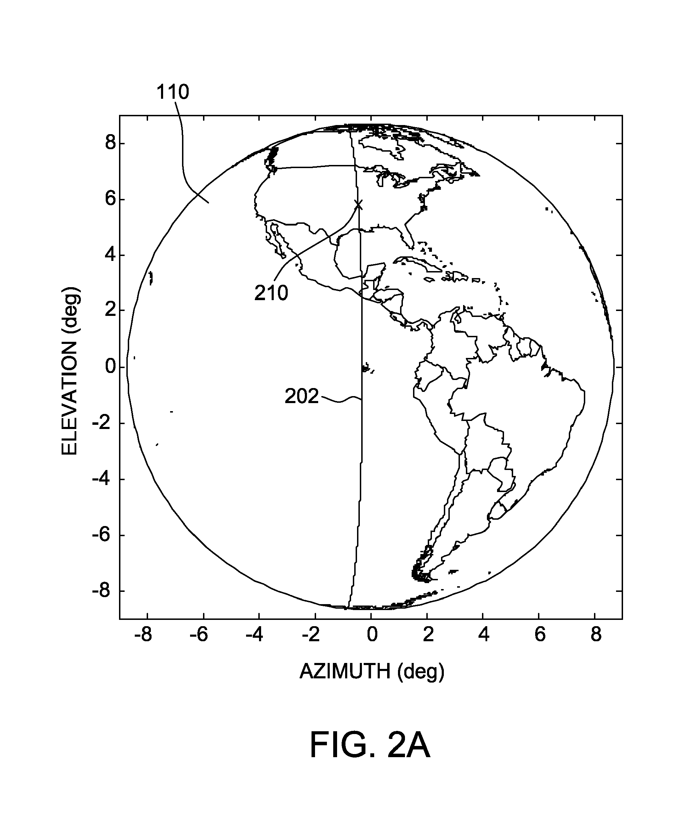

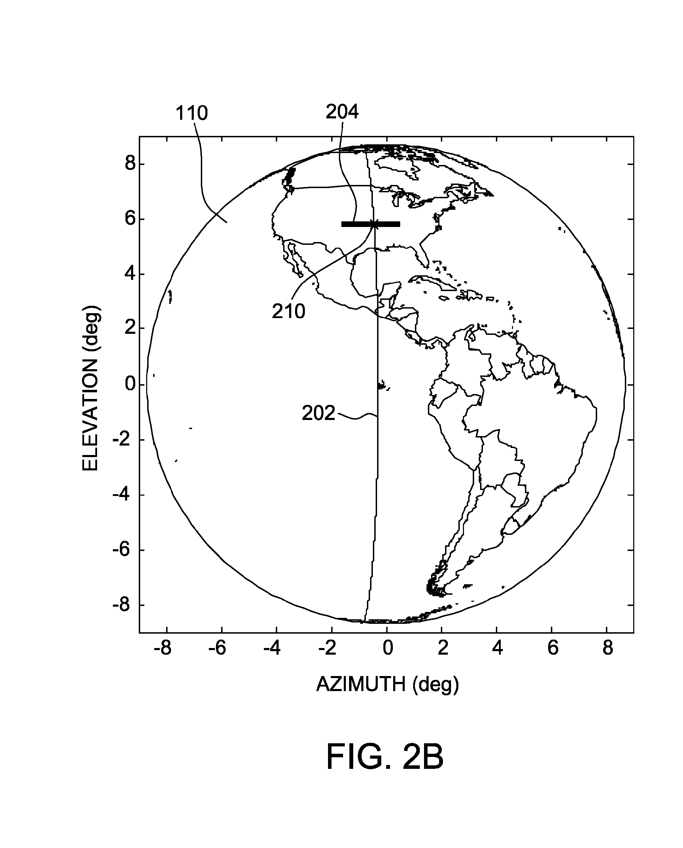

Figs. 2A and 2B are schematic diagrams illustrating an exemplary method of locating an interferer, such as interferer 108, using a geolocation system, such as geolocation system 100 (both shown in Fig. 1). From the TDOA signature generated, as shown in Fig. 2A, a first curve 202 on the surface of the Earth 110 can be determined, on which the interferer 108 must lie. That is, given the TDOA signature between respective first and second satellites 102 and 104, computing device 130 restricts the possible locations of interferer 108 to lying on first curve 202. In the exemplary embodiment, first and second satellites 102 and 104 are geostationary satellites, and first curve is a line of longitude that identifies the East-West position of interferer 108.

To determine the location 210 of interferer 108 along first curve 202, a second curve 204 can be determined, as shown in Fig. 2B, and as is described in more detail below. The location 210 of interferer 108 is then determined to be at the intersection between curves 202 and 204.

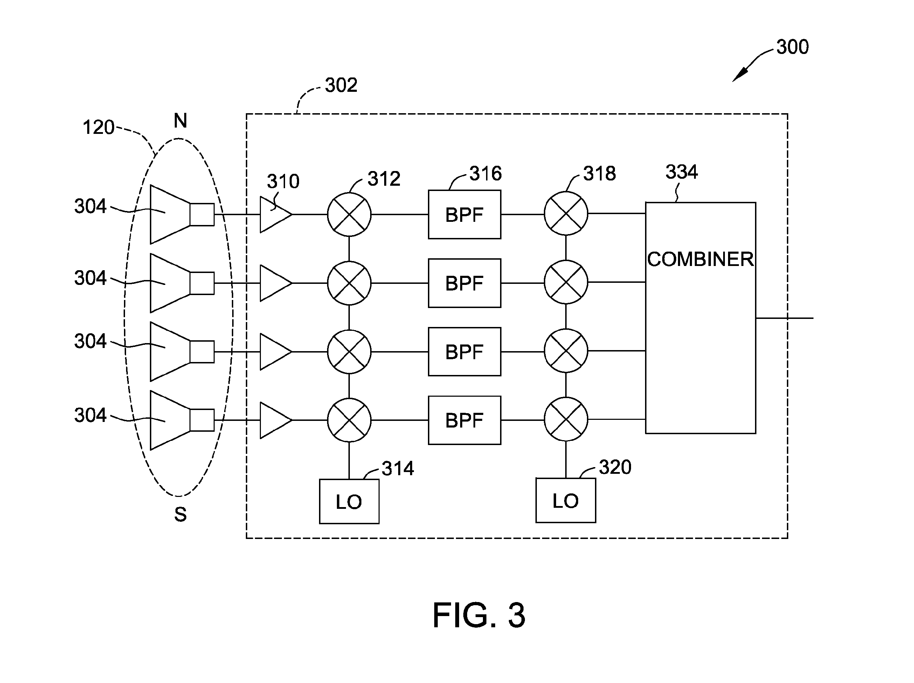

Fig. 3 is a schematic diagram of an exemplary linear array system 300 that may be used with geolocation system 100 (shown in Fig. 1). Linear array system 300 includes linear array 120 and a plurality of signal processing components 302. In the exemplary embodiment, linear array 120 is located on first satellite 102, while signal processing components 302 are at ground station 106 (shown in Fig. 1). Alternatively, signal processing components 302 may also be on first satellite 102.

In the exemplary embodiment, linear array 120 includes four elements 304 that each receive signals from interferer 108. Alternatively, linear array 120 may include any number of elements 304 that enables system 100 to function as described herein. In general, the more elements 304 included in array, the more accurately the location 210 of interferer 108 can be determined. Signals from interferer 108 received at linear array 120 are used to determine second curve 204, as described in more detail below.

Elements 304 in linear array 120, in the exemplary embodiment, are aligned from North to South. Alternatively, elements 304 may be oriented in any configuration that enables linear array 120 to function as described herein. Signals received by elements 304 are transmitted to ground station 106 and processed by signal processing components 302. Specifically, in the exemplary embodiment, each signal received by each element 304 is amplified with an amplifier 310, mixed at a first mixer 312 with a signal from a first local oscillator 314, transmitted through a bandpass filter 316, and mixed at a second mixer 318 with a signal from a second local oscillator 320. Accordingly, signals from elements 304 undergo narrow band filtering during signal processing and thus reduce a required downlink bandwidth. The processed signals are input into a combiner 334 that determines direction of arrival information. Alternatively, signals from elements 304 may be processed using any suitable signal processing methods that enable system 100 to function as described herein.

Combiner 334 uses an array correlation matrix to determine the direction of arrival information for interferer 108. Since elements 304 are arranged linearly, determining the direction of arrival information is relatively simple as compared to using a two-dimensional array. From the direction of arrival information, the second curve 204, on the surface of the Earth 110, can be determined on which interferer 108 must lie. Specifically, when elements 304 are aligned from North to South (as in the exemplary embodiment), combiner 334 determines an East-West line (i.e., a line of latitude) that specifies the North-South position of interferer 108.

Referring again to Fig. 2B, as interferer 108 lies on the first curve 202 generated using the TDOA signature between first and second satellites 102 and 104, and interferer 108 further lies on second curve 204 generated using the direction of arrival information from elements 304 of linear array 120, the location 210 of interferer 108 is at the intersection between first curve 202 and second curve 204.

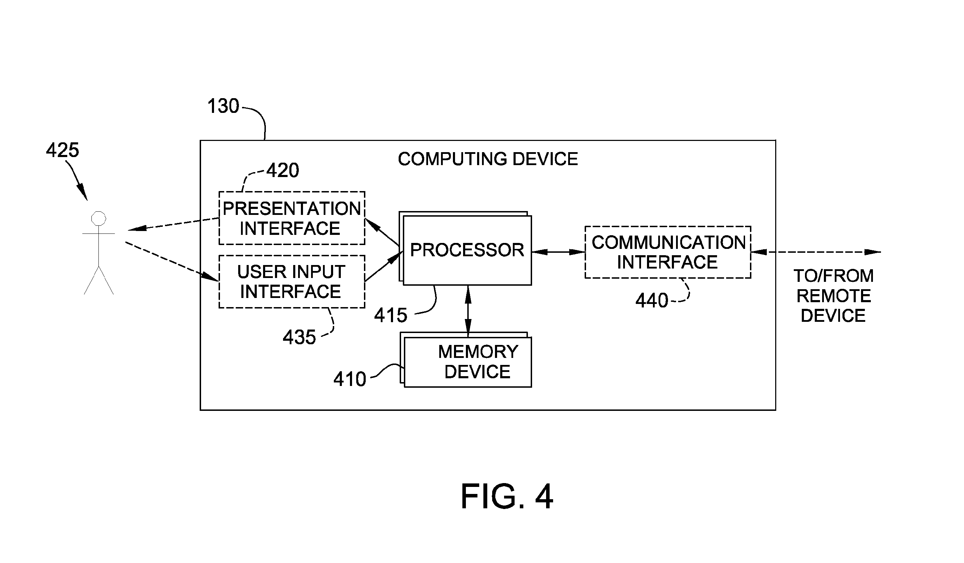

Fig. 4 is a block diagram of an exemplary computing device 130 that may be used with geolocation system 100 (shown in Fig. 1) to determine the location 210 of interferer 108. Computing device 130 includes at least one memory device 410 and a processor 415 that is coupled to memory device 410 for executing instructions. In some embodiments, executable instructions are stored in memory device 410. In the exemplary embodiment, computing device 130 performs one or more operations described herein by programming processor 415. For example, processor 415 may be programmed by encoding an operation as one or more executable instructions and by providing the executable instructions in memory device 410.

Processor 415 may include one or more processing units (e.g., in a multi-core configuration). Further, processor 415 may be implemented using one or more heterogeneous processor systems in which a main processor is present with secondary processors on a single chip. As another illustrative example, processor 415 may be a symmetric multi-processor system containing multiple processors of the same type. Further, processor 415 may be implemented using any suitable programmable circuit including one or more systems and microcontrollers, microprocessors, reduced instruction set circuits (RISC), application specific integrated circuits (ASIC), programmable logic circuits, field programmable gate arrays (FPGA), and any other circuit capable of executing the functions described herein.

In the exemplary embodiment, processor 415 determines the location 210 of interferer 108, as described herein. That is, processor 415 determines first curve 202 based on the TDOA signature between first and second satellites 102 and 104, determines second curve 204 based on the direction of arrival information from elements 304 of linear array, and determines the location 210 of interferer 108 as the intersection of first curve 202 and second curve 204. Further, in at least some embodiments, processor 415 performs the above-described signal processing for linear array 120.

In the exemplary embodiment, memory device 410 is one or more devices that enable information such as executable instructions and/or other data to be stored and retrieved. Memory device 410 may include one or more computer readable media, such as, without limitation, dynamic random access memory (DRAM), static random access memory (SRAM), a solid state disk, and/or a hard disk. Memory device 410 may be configured to store, without limitation, application source code, application object code, source code portions of interest, object code portions of interest, configuration data, execution events and/or any other type of data.

In some embodiments, computing device 130 includes a presentation interface 420 that is coupled to processor 415. Presentation interface 420 presents information, such as application source code and/or execution events, to a user 425. For example, presentation interface 420 may include a display adapter (not shown) that may be coupled to a display device, such as a cathode ray tube (CRT), a liquid crystal display (LCD), an organic LED (OLED) display, and/or an "electronic ink" display. In some embodiments, presentation interface 420 includes one or more display devices. In the exemplary embodiment, presentation interface 420 displays the location 210 of interferer 108. The location 210 may be displayed on presentation interface 420 as a pair of latitude and longitude coordinates, as a point on a map (such as shown in Figs. 2A and 2B), and/or in any format that enables user 425 to observe the location 210 of interferer 108.

In the exemplary embodiment, computing device 130 includes a user input interface 435. In the exemplary embodiment, user input interface 435 is coupled to processor 415 and receives input from user 425. User input interface 435 may include, for example, a keyboard, a pointing device, a mouse, a stylus, a touch sensitive panel (e.g., a touch pad or a touch screen), a gyroscope, an accelerometer, a position detector, and/or an audio user input interface. A single component, such as a touch screen, may function as both a display device of presentation interface 420 and user input interface 435.

In the exemplary embodiment, computing device 130 includes a communication interface 440 coupled to processor 415. Communication interface 440 communicates with one or more remote devices, such as first and second satellites 102 and 104. To communicate with remote devices, communication interface 440 may include, for example, a wired network adapter, a wireless network adapter, and/or a mobile telecommunications adapter.

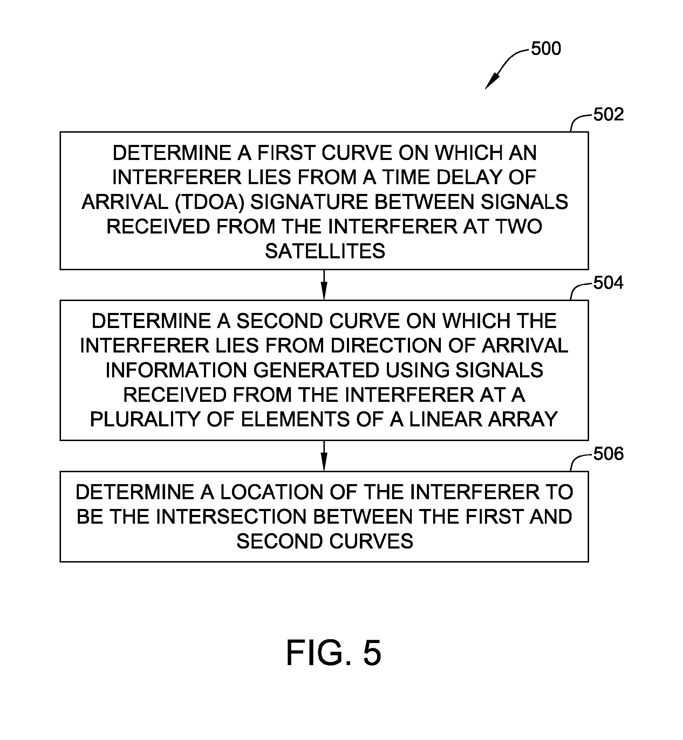

Fig. 5 is a flowchart of an exemplary method 500 for use in locating an interferer, such as interferer 108 (shown in Fig. 1). A first curve, such as first curve 202 (shown in Figs. 2A and 2B) is determined 502 from a TDOA signature between two satellites, such as first and second satellites 102 and 104 (both shown in Fig. 1). A second curve, such as second curve 204 (shown in Fig. 2B) is determined 504 from a direction of arrival information from a linear array, such as linear array 120 (shown in Fig. 1), on one of the satellites. Since the interferer lies on the first curve and lies on the second curve, the location of the interferer is then determined 506 to be an intersection between the first and second curves.

In an alternative embodiment, the location of the interferer may be determined using a single satellite, such as first satellite 102 (shown in Fig. 1). More specifically, if the single satellite is moving (i.e., not geostationary), the TDOA signature for determining a first curve, such as first curve 202 (shown in Figs. 2A and 2B), can be generated by collecting signal information at the single satellite at two different locations. A second curve, such as second curve 204 (shown in Fig. 2B), can be generated using a linear array on the single satellite, such as linear array 120 (shown in Fig. 1). For example, if the motion of the single satellite is primarily in the East-West direction, a linear array aligned along the North-South direction provides the complementary information. Conversely, if the motion of the single satellite is primarily in the North-South direction, a linear array aligned along the East-West direction provides the complementary information. Since the interferer lies on the first curve and lies on the second curve, similar to above, the location of the interferer is then determined to be an intersection between the first and second curves.

The embodiments described herein enable an interferer to be located accurately. A first curve is generated using a time difference of arrival signature between two satellites. A second curve is generated using direction of arrival information generated from a linear array. The location of the interferer is determined to be the intersection between the first and second curves.

As compared to at least some known geolocation systems, the systems and methods described herein are capable of locating an interferer using a relatively simpler configuration. While at least some known geolocation systems use a two-dimensional array to determine direction of arrival information, the systems and methods described herein utilize a single linear array. For example, in one embodiment, a four element linear array in the systems and methods described herein provides roughly the same accuracy as a 4x4 array in at least some known geolocation systems, resulting in a 75% reduction in complexity.

The embodiments described herein may utilize executable instructions embodied in a non-transitory computer readable medium, including, without limitation, a storage device or a memory area of a computing device. Such instructions, when executed by one or more processors, cause the processor(s) to perform at least a portion of the methods described herein. As used herein, a "storage device" is a tangible article, such as a hard drive, a solid state memory device, and/or an optical disk that is operable to store data.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose various embodiments, which include the best mode, to enable any person skilled in the art to practice those embodiments, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method for locating an interferer, said method comprising:
determining, from a time delay of arrival (TDOA) signature between signals received from the interferer at two satellites (102,104), a first curve (202) on which the interferer (108) lies;
determining, from direction of arrival information generated using signals received from the interferer (108) at a plurality of elements (304) of a linear array (120), a second curve (204) on which the interferer (108) lies; and
determining, based on an intersection between the first and second curves, the location of the interferer (108).

2. A method in accordance with Claim 1, wherein determining a first curve (202) comprises determining a line of longitude.

3. A method in accordance with Claim 1, wherein determining a second curve (204) comprises determining a line of latitude.

4. A method in accordance with Claim 1, wherein determining a first curve (202) comprises determining, from a TDOA signature between signals received from the interferer (108) at two geostationary satellites (102,104), a first curve (202) on which the interferer (108) lies.

5. A method in accordance with Claim 1, further comprising performing signal processing on the signals received from the interferer (108) at the plurality of elements (304) to generate the direction of arrival information.

6. A method in accordance with Claim 1, wherein determining a second curve (204) comprises determining a second curve (204) on which the interferer (108) lies from direction of arrival information generated using signals received from the interferer (108) at a plurality of elements (304) aligned in a North-South direction.

7. A system for locating an interferer, said system comprising:
a linear array (120) comprising a plurality of elements (304) configured to receive signals from the interferer (108); and
a computing device (130) communicatively coupled to said linear array (120), a first satellite (102), and a second satellite (104), said computing device (130) configured to:
determine, from a time delay of arrival (TDOA) signature between signals received from the interferer (108) at the first (102) and second (104) satellites, a first curve (202) on which the interferer (108) lies;
determine, from direction of arrival information generated from signals received from the interferer (108) at said plurality of elements (304) of said linear array (120), a second curve (204) on which the interferer (108) lies; and
determine, based on an intersection between the first (202) and second (204) curves, the location of the interferer (108).

8. A system in accordance with Claim 7, wherein said computing device (130) is communicatively coupled to at least one geostationary satellite (102,104).

9. A system in accordance with Claim 7, wherein said linear array (120) is on one of the first satellite (102) and the second satellite (104).

10. A system in accordance with Claim 7, wherein the first satellite and the second satellite are the same non-geostationary satellite, and wherein said computing device (130) is configured to determine the first curve (202) from a TDOA signature between signals received from the interferer at a first location of the non-geostationary satellite and at a second location (204) of the non-geostationary satellite that is different from the first location.

11. A system in accordance with Claim 7, wherein said plurality of elements (304) are aligned from North to South.

12. A system in accordance with Claim 7, wherein to determine the first curve (202), said computing device (130) is configured to determine a line of longitude.

13. A system in accordance with Claim 7, wherein to determine the second curve (204), said computing device (130) is configured to determine a line of latitude.

14. A computer readable medium comprising computer program instructions that, when executed, cause a processor (415) to implement the method of any of claims 1 to 6.
